Europäisches Patentamt

European Patent Office

Office européen des brevets

(19)

(11) Numéro de publication: **0 163 345**
**A1**

## (12) DEMANDE DE BREVET EUROPEEN

(21) Numéro de dépôt: 85200786.3

(22) Date de dépôt: 15.05.85

(51) Int. Cl.⁴: **G 01 S 13/87**
**G 01 S 5/14, G 01 C 21/16**

(30) Priorité: 29.05.84 FR 8408390

(43) Date de publication de la demande:
04.12.85 Bulletin 85/49

(84) Etats contractants désignés:
DE FR GB

(71) Demandeur: TELECOMMUNICATIONS
RADIOELECTRIQUES ET TELEPHONIQUES T.R.T.
88, rue Brillat Savarin
F-75013 Paris(FR)

(84) Etats contractants désignés:
FR

(71) Demandeur: N.V. Philips' Gloeilampenfabrieken
Groenewoudseweg 1
NL-5621 BA Eindhoven(NL)

(84) Etats contractants désignés:
DE GB

(72) Inventeur: Tomasi, Jean-Pierre
SOCIETE CIVILE S.P.I.D. 209 rue de l'Université
F-75007 Paris(FR)

(74) Mandataire: Pyronnet, Jacques et al,
Société Civile S.P.I.D. 209 rue de l'Université
F-75007 Paris(FR)

(54) Système de guidage terminal ou de recalage de position pour aéronef par mesures de distance.

(57) L'aéronef est muni de moyens de calcul. Le système, du type FM-CW, comporte un radioaltimètre embarqué qui coopère avec un répondeur-balise situé en A. Selon l'invention, le radioaltimètre est adapté en distancemètre et comporte des moyens (9, 14, 15, 16) pour décaler en fréquence le signal d'oscillation locale. Le système a une portée suffisante pour pouvoir fonctionner dans un deuxième volume prédéterminé, centré autour du point A, et pouvant englober un premier volume défini par la précision en distance latérale (d) et verticale (h) propre à l'aéronef pour son retour autonome. La position précise de l'aéronef à proximité de A est déterminée par au moins deux mesures successives de la distance D par rapport au point A.

Application aux missiles de reconnaissance aérienne.

FIG.4

EP 0 163 345 A1

SYSTEME DE GUIDAGE TERMINAL OU DE RECALAGE DE POSITION POUR AERONEF PAR MESURES DE DISTANCE.

L'invention concerne un système de guidage terminal ou de recalage de position pour aéronef, notamment pour missile de reconnaissance aérienne, muni de moyens de calcul selon lequel un radioaltimètre embarqué à bord de l'aéronef coopère avec un répondeur disposé, au sol, à l'emplacement A souhaité pour le retour de l'aéronef ou le recalage, le radioaltimètre étant du type à onde continue modulée en fréquence de façon sensiblement linéaire, à une antenne émettrice et une antenne réceptrice orientées vers le sol, le répondeur étant du type à pseudo-onde entretenue comportant des commutateurs à deux positions pour radiofréquences et une antenne réceptrice-émettrice.

L'invention s'applique de préférence à un aéronef qui possède une centrale à inertie ou tout autre système donnant une précision semblable et des moyens de calcul suffisants.

Les missiles de reconnaissance aérienne sont conçus pour, partant d'une base, parcourir un certain trajet prédéterminé, effectuer des observations au-dessus de certaines zones et revenir à une base qui peut être la base de départ ou une autre base et qui correspond à la fin du trajet. Toutes ces opérations sont effectuées automatiquement au moyen d'une part d'une centrale à inertie qui permet au missile de connaître à tout instant, pendant le vol, ses accélérations, vitesse et position horizontales, d'autre part d'un radioaltimètre qui indique la hauteur par rapport au sol. Le trajet horizontal ainsi que la hauteur sont programmés à l'avance et un ordinateur embarqué permet de comparer à tout instant la position théorique du missile à la position indiquée par la centrale à inertie et de faire au fur et à mesure les corrections de pilotage nécessaires pour maintenir le missile aussi proche que possible de la trajectoire théorique prévue.

Le trajet parcouru par le missile est de l'ordre de quelques centaines de kilomètres et bien que sa centrale à inertie soit très précise, son erreur de position, à l'arrivée, est de l'ordre de quelques centaines de mètres. Or, on souhaite récupérer le missile ou à tout le moins les informations qu'il a recueillies au cours de sa mission et cette imprécision sur la position peut s'avérer gênante aussi bien pour la difficulté de localiser précisément ce qui doit être récupéré et qui peut être parachuté au retour de l'engin que pour l'espace à prévoir pour cet atterrissage. D'une façon générale, on s'accommode des inconvénients précités et aucun système de guidage terminal n'est prévu pour le missile qui reste autonome du début à la fin de son trajet.

L'invention a pour but d'élaborer un système de guidage terminal ou de recalage de position pour aéronef qui soit simple à réaliser et à mettre en oeuvre. L'idée de départ de l'invention est de mettre à profit la présence du radioaltimètre déjà présent à bord de l'aéronef, en le faisant coopérer, à proximité du point de retour, avec un répondeur-balise ce dernier pouvant être d'un type connu en soi et de préférence tel que décrit dans le brevet français 2 435 866, ce qui permet d'obtenir une portée de fonctionnement suffisante, sans risque d'éblouissement des récepteurs ni d'accrochage du répondeur sur un écho intempestif du signal réémis.

Les inconvénients de l'art antérieur sont supprimés et le but indiqué ci-dessus est atteint grâce au fait que le système de guidage terminal ou de recalage défini en préambule est remarquable en ce que ledit radioaltimètre est adapté pour un fonctionnement séquentiel en distancemètre et comporte à cet effet des moyens pour décaler en fréquence le signal d'oscillation locale à l'aide d'un commutateur à deux

positions, ledit système ayant une portée suffisante pour pouvoir fonctionner dans un deuxième volume prédéterminé centré autour du point A, ledit deuxième volume pouvant englober un premier volume défini par la précision en distance propre à l'aéronef pour son retour autonome et que la position précise de l'aéronef à proximité du point A est déterminée, lors du recalage ou du retour de ce dernier, par au moins deux mesures successives de distance par rapport au point A.

La présence dans la voie d'oscillation locale d'un mélangeur qui crée un décalage en fréquence égal au décalage en fréquence apporté au signal dans le répondeur avant sa réémission permet de sélectionner l'écho du répondeur en éliminant celui du sol. Comme il n'est pas indispensable que le radioaltimètre fonctionne en permanence, il est ainsi possible de l'utiliser, à proximité du point d'arrivée de l'aéronef en tant que distancemètre, le but étant que l'aéronef puisse déterminer lui-même de façon précise sa position par rapport au point A en un point de repérage à un instant donné, après quoi la procédure finale d'arrivée au point A peut être effectuée automatiquement par exemple au moyen de la centrale à inertie et des moyens de calcul embarqués, cas dans lequel l'utilisation du distancemètre embarqué et du répondeur au point A n'est plus indispensable après le passage de l'aéronef au point de repérage. On verra ci-dessous qu'il est possible de déterminer la position précise de l'aéronef exclusivement par mesures de distance, c'est-à-dire sans mesure d'angle, mais cela nécessite au moins deux mesures de distance. Les deux premières mesures de distance, effectuées sans modification de la trajectoire de l'engin, permettent de déterminer deux points possibles pour la position de l'aéronef mais il se pose un problème d'ambiguïté consistant à faire connaître à l'aéronef par quel côté il aborderait le point A en suivant sa trajectoire autonome, c'est-à-dire si aucune correction n'était apportée

à sa trajectoire lors de son arrivée. Différents modes de réalisation de l'invention visent soit à lever cette ambiguïté, soit à rendre inutile sa levée.

Selon un premier mode de réalisation, le système de guidage terminal pour aéronef selon l'invention est remarquable en ce qu'après ladite deuxième mesure de distance en un point B à un instant $t_2$, l'aéronef reçoit une commande de trajectoire en boucle selon un sens de rotation prédéterminé de façon telle qu'il repasse après un temps mesurable sensiblement au point B à un instant $t_3$ avec un vecteur vitesse sensiblement perpendiculaire à celui qu'il avait à l'instant $t_2$ et qu'une troisième mesure de distance est effectuée à un instant $t_4$ juste postérieur à l'instant $t_3$.

La troisième mesure de distance permet de lever l'ambiguïté précitée selon que la valeur trouvée pour cette troisième mesure est inférieure ou supérieure à la valeur trouvée pour la deuxième mesure.

Selon un deuxième mode de réalisation, le système de guidage terminal pour aéronef est remarquable en ce que plusieurs mesures rapprochées successives de distance sont effectuées sans modification de la trajectoire autonome de l'aéronef, incluant des distances décroissantes au moins jusqu'au passage au plus près du point A, et au moins une distance $L_5$ à nouveau croissante en un point F à l'instant $t_5$.

Ce deuxième mode de réalisation engendre lui-même plusieurs variantes qui sont explicitées ci-dessous.

La description qui suit en regard des dessins annexés, le tout donné à titre d'exemple fera bien comprendre comment l'invention peut être réalisée.

La figure 1 montre selon une vue tridimensionnelle le volume dans lequel le système selon l'invention peut fonctionner, à proximité du point d'arrivée.

La figure 2 est un schéma synoptique du radioaltimètre adapté en distancemètre selon l'invention.

La figure 3 est un schéma synoptique du répondeur connu pour l'essentiel, adapté pour la mise en oeuvre de l'invention.

Les figures 4, 5 et 6 illustrent un premier, deuxième et troisième mode de réalisation du système de guidage selon l'invention.

La figure 7 illustre un quatrième mode de réalisation du système de guidage selon l'invention, en partie compatible avec les trois premiers modes de réalisation.

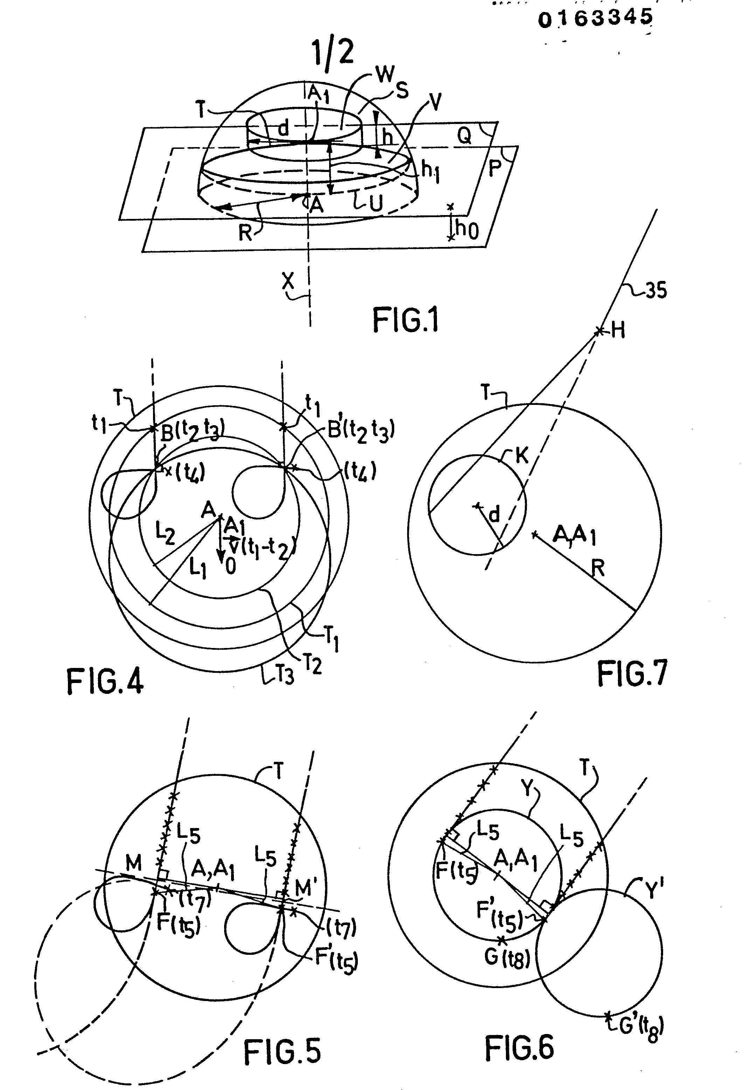

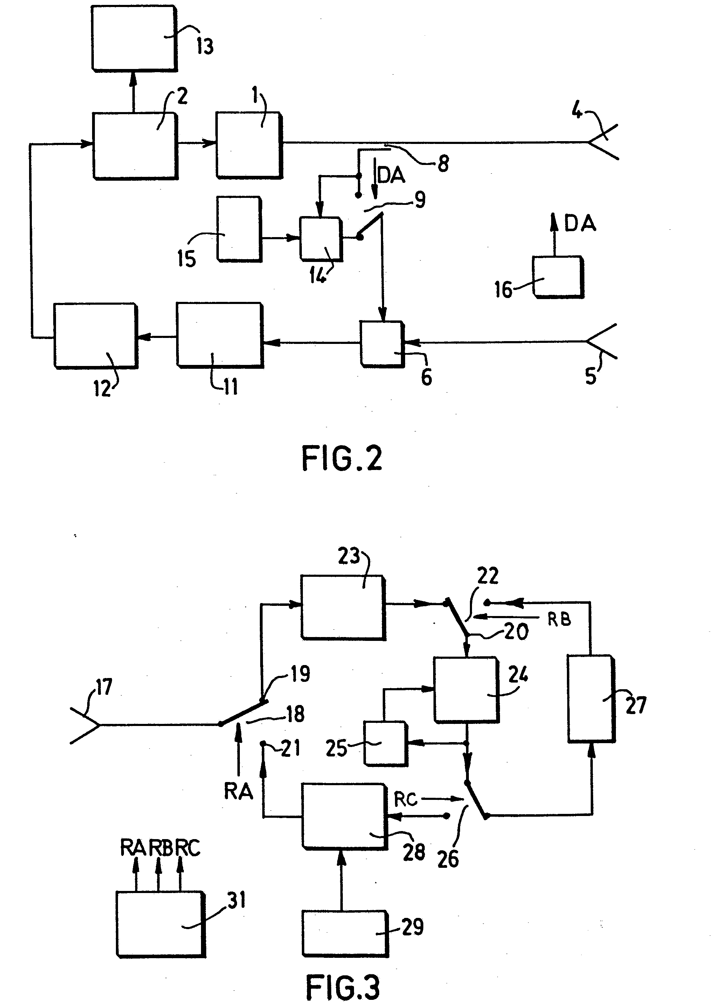

Sur la figure 1 le sol est symbolisé par un plan P auquel appartient le point A prévu pour l'arrivée ou le recalage de position de l'aéronef, et où l'on a placé un répondeur conçu pour recevoir et réémettre après amplification des ondes continues modulées en fréquence. Une demi sphère S de centre A et de rayon R indique la portée du système de guidage, R étant la distance extrême au-delà de laquelle l'atténuation des ondes dans l'air l'emporte sur les capacités d'amplification du système, la distance D n'étant alors plus mesurable. Dans la pratique, lorsque l'aéronef arrive à proximité du point A, il est censé se trouver à une hauteur supérieure à une hauteur prédéterminée $h_o$ inférieure à R, c'est-à-dire au-dessus d'une surface symbolisée par un plan Q sur la figure 1 situé à la distance $h_o$ au-dessus du plan P. L'intersection de la demi sphère S et du plan Q est le cercle T. D'autre part, le diagramme d'antenne du répondeur au point A est tel que la réception est possible au-dessus d'une surface courbe de révolution autour du point A référencée U et qui peut être assimilée en première approximation soit à une calotte sphérique soit à un cône de sommet A et passant par le cercle T. Le volume délimité par la surface courbe U et par la calotte sphérique supérieure de la demi sphère S limitée au cercle T est un volume de révolution V autour d'un axe vertical X passant par le point A à l'intérieur duquel le système selon l'invention peut fonctionner, ce volume V étant qualifié de deuxième volume.

Par ailleurs, l'aéronef ou, pour fixer les idées, le missile de reconnaissance est conçu pour revenir au point A à une certaine hauteur $h_1$, ce qui définit un point $A_1$ sur l'axe X. En l'absence de système de guidage terminal, la centrale à inertie et le radioaltimètre embarqués permettent d'atteindre le point $A_1$ avec la précision d dans le sens horizontal et la précision h dans le sens vertical, ce qui définit un premier volume cylindrique W. Le système de guidage terminal est conçu de façon telle que le deuxième volume V contienne entièrement le premier volume W et, de préférence, on choisit les distances $h_0$ et $h_1$ égales. Dans ces conditions, la portée R du système la plus faible possible est nécessairement supérieure à la distance d imposée par le missile ou l'aéronef.

Le radioaltimètre utilisé dans l'aéronef, représenté à la figure 2 est d'un type connu et par exemple semblable à ceux qui sont décrits dans le brevet français 2 344 031. Ce radioaltimètre comporte, pour l'essentiel, un générateur de fréquence à fréquence commandée 1 qui, sous la commande d'un modulateur 2 produisant un signal de tension ou de courant en dents de scie asymétriques, par exemple à pente positive, fournit un signal modulé linéairement en fréquence de façon récurrente. Ce dernier signal de fréquence F(t) est appliqué à une antenne d'émission 4, à polarisation circulaire qui est montée fixe sur l'aéronef et dirigée vers le sol. L'onde émise par l'antenne 4 est réfléchie par le sol et est captée par l'antenne réceptrice 5. L'antenne 5 est reliée à une première entrée d'un mélangeur soustractif 6. Le mélangeur 6 reçoit aussi sur une deuxième entrée une fraction du signal émis par l'intermédiaire d'un coupleur 8 et d'un deuxième commutateur à deux positions pour hyperfréquences 9 lorsque

ce dernier est dans la position inverse de celle représentée sur la figure 2. Les variations de fréquence des ondes émise et reçue en fonction du temps F(t) et R(t) ont la forme de signaux en dents de scie asymétriques à pente positive. Ces courbes ont la même forme que le signal de modulation fourni par le modulateur 2. La période de modulation est appelée T. Les courbes des signaux émis et reçu sont décalées entre elles du temps : $\tau = \dfrac{2H}{c}$, qui correspond au temps de propagation de l'onde de l'antenne 4 vers l'antenne 5 via le sol, H étant la distance moyenne des antennes au sol et c étant la vitesse de propagation de l'onde.

Le mélangeur 6 forme le signal de battement à fréquence $f_b$ entre le signal prélevé sur l'oscillation locale et le signal reçu, et la fréquence de battement $f_b$ apparaît comme le décalage en fréquence entre les rampes des deux courbes en dents de scie décrites ci-dessus. Les variations de fréquence représentées par les deux courbes en question sont pratiquement linéaires et on peut écrire :

$$\frac{\Delta F}{T} = \frac{f_b}{\tau} \qquad\qquad (1)$$

$\Delta F$ étant l'écart de fréquence du signal émis ou reçu, connu avec précision et par exemple maintenu constant.

Le signal de sortie à fréquence $f_b$ du mélangeur 6 est appliqué, par l'intermédiaire d'un amplificateur 11 à un discriminateur de fréquence 12 dont la fréquence centrale fixe est $f_o$ et qui fournit un signal E représentatif de l'écart de fréquence $f_b - f_o$. Ce signal est appliqué de préférence par l'intermédiaire d'un circuit intégrateur-anamorphoseur non représenté à la borne de commande du modulateur 2 pour modifier la pente du signal de modulation en dents de scie. On a ainsi formé une boucle d'asservissement dont le signal d'erreur est constitué par le signal de sortie E du discriminateur 12 et lorsque cette boucle est stabilisée, le signal d'erreur est annulé et l'on a :

$$f_b = f_o.$$

La formule (1) ci-dessus devient :

$$\frac{\Delta F}{T} = \frac{f_O}{\tau} \qquad (2)$$

On en déduit :

$$T = \frac{2\Delta F}{c.f_O} .H \qquad (3)$$

Dans la relation (3), le facteur $\frac{2\Delta F}{c.f_O}$ est connu et la période de modulation T est donc proportionnelle à la hauteur H de sorte que la mesure de la distance peut être fournie par un périodemètre 13 mesurant la période T du signal de modulation.

Outre le principe de base du radioaltimètre connu rappelé ci-dessus, il existe aussi divers moyens connus pour améliorer la linéarité des rampes de fréquence du signal F(t) et la stabilité des paramètres $\Delta F$ et $f_O$, le tout visant à améliorer la précision sur la hauteur H mesurée.

Un fonctionnement en radioaltimètre du circuit de la figure 2 suppose que les éléments 5 et 8 soient reliés directement chacun à une entrée du mélangeur 6, ce qui est obtenu lorsque le commutateur 9 reçoit un signal $\overline{DA}$ en provenance d'un séquenceur 16.

Selon l'invention, le commutateur 9 permet d'utiliser le circuit de la figure 2 comme distancemètre, en association avec un répondeur décrit ci-dessous en référence à la figure 3. A cet effet, lorsque l'aéronef pénètre à l'intérieur du volume V, le signal F(t) émis par l'antenne 4 est reçu par le répondeur qui l'amplifie, le décale dans le temps d'un intervalle de temps $\tau'$ fixe, le décale en fréquence d'une valeur $F_1$ et le réémet sous la forme R(t). L'amplification du système est suffisante, à l'intérieur du volume V, pour que ce signal R(t) soit capté par l'antenne 5. Le signal R(t) affaibli est alors transmis à la première entrée du mélangeur 6. Simultanément, le signal d'oscillation locale est transmis, par l'intermédiaire du coupleur 8, d'un mélangeur de fréquence 14 et du commutateur 9 dans la position représentée sur la figure 2 sous la commande du signal DA, à la deuxième entrée du mélangeur 6. Le mélangeur 14, par exemple du type à bande latérale unique (BLU) reçoit sur une deuxième entrée, d'un générateur de fréquence 15, un signal de fréquence $F_1$ de façon telle que son signal de sortie suive la même variation de fréquence que le signal R(t) en provenance du répondeur. Les décalages de fréquence $F_1$ présents sur les deux entrées du mélangeur soustractif 6 s'annulent en sortie de ce mélangeur. Le décalage de fréquence $F_1$ opéré sur les deux voies permet ainsi de sélectionner l'écho du répondeur et d'éliminer celui du sol qui est aussi reçu par l'antenne 5 en mode distancemètre. Le discriminateur 12 traite alors un signal de battement à fréquence $f_{b1}$ qui est représentatif de la distance D entre le répondeur au point A et l'aéronef et cette distance D peut être mesurée en 13 par le circuit de la figure 2 comme décrit ci-dessus pour la hauteur H. On notera, dans ce cas, que le signal d'écho est retardé de la valeur $\tau'$ et que la formule qui permet de déterminer la distance s'écrit :

$$f_{b1} = f_o = (\frac{2D}{c} + \tau') \frac{\Delta F}{T} \qquad (4)$$

de laquelle on déduit :

$$T = \frac{2\Delta F}{c.f_o} D + \frac{\tau'\Delta F}{f_o} \qquad (5)$$

Dans les formules (4) et (5) il n'est pas tenu compte de l'effet Doppler, généralement non négligeable, que l'on sait mesurer et dont on peut s'affranchir de façon connue.

On obtient donc, comme pour la mesure de la hauteur, l'expression d'une droite, pour les variables D et T, ce qui permet de déduire facilement la valeur de D par mesure de T.

Il est intéressant, selon l'invention, de ne pas modifier la base d'antennes du radioaltimètre lorsqu'on adapte ce dernier en distancemètre à cela près que les deux antennes doivent avoir un diagramme de rayonnement suffisamment large et ceci pas uniquement pour des raisons de simplicité et donc d'économie. En effet, lorsque l'aéronef pénètre à l'intérieur du volume V il n'est généralement pas dirigé vers l'axe X pour les raisons d'imprécision de la centrale à inertie indiquées ci-dessus et qu'on cherche justement à corriger. Dans ces conditions, l'antenne émettrice 4 orientée vers le sol, pourvu qu'elle ait un diagramme suffisamment large permet une communication avec le répondeur placé en A avec un gain d'antenne fixe quel que soit l'angle de rentrée horizontal de l'aéronef dans le volume V, l'antenne du répondeur ayant quant à elle un diagramme de rayonnement circulaire omnidirectionnel et étant dirigée vers le haut. L'avantage ainsi obtenu d'un gain d'antennes indépendant de l'orientation dans un plan horizontal de l'aéronef est contrebalancé par le fait que ce gain d'antenne est faible. Ceci explique pourquoi il est nécessaire d'utiliser un répondeur apte à procurer un gain élevé. Le répondeur utilisé pour la mise en oeuvre de l'invention et décrit ci-dessous en référence à la figure 3 est connu, pour l'essentiel, notamment du brevet français 2 435 866, déjà mentionné ci-dessus, au nom de la demanderesse.

Le répondeur de la figure 3 permet d'améliorer le découplage entre le signal reçu et le signal réémis et d'obtenir des amplifications très élevées. Une antenne réceptrice-émettrice 17 est reliée à la borne milieu d'un premier commutateur à deux positions pour hyperfréquences 18 dont les contacts 19 et 21 constituent les bornes d'entrée et de sortie du répondeur. L'entrée 19 est reliée à un contact d'un deuxième commutateur à deux positions 22 de préférence par l'intermédiaire d'un préamplificateur 23 présentant un bon rapport signal sur bruit. La présence du préamplificateur 23 n'est pas indispensable mais souhaitable dans la mesure où il permet d'améliorer le rapport signal sur

bruit, étant donné que l'on cherche à obtenir un gain élevé. La borne milieu 20 du commutateur 22 est reliée à l'entrée d'un amplificateur 24 dont l'amplification est régulée par un circuit de commande de gain 25 rebouclé entre la sortie de l'amplificateur et une entrée de commande. La sortie de l'amplificateur 24 est connectée à la borne milieu d'un troisième commutateur à deux positions 26 dont les contacts sont reliés respectivement à l'entrée d'une ligne à retard 27 et à l'entrée d'un mélangeur de fréquence 28. La sortie de la ligne à retard 27 est reliée à l'autre contact du commutateur 22 et la sortie du mélangeur 28 au contact 21 du commutateur 18. Le mélangeur 28, par exemple du type à bande latérale unique (BLU) reçoit sur une deuxième entrée, d'un générateur de fréquence 29, un signal de fréquence $F_1$ de façon telle que cette fréquence soit ajoutée respectivement retranchée de celle du signal d'entrée en provenance du commutateur 18. Le signal de sortie $R(t)$ du mélangeur 28 et donc du répondeur-balise situé au point A est décalé en fréquence par rapport au signal d'entrée du répondeur, de la valeur $F_1$. Comme on l'a décrit ci-dessus, le signal d'oscillation locale, dans le distancemètre embarqué, est décalé de la même valeur $F_1$ et dans le même sens, c'est-à-dire par addition, respectivement soustraction de $F_1$, pour comparaison dans le mélangeur 6, figure 2, avec le signal à fréquence $R(t)$ capté par l'antenne 4.

Le répondeur de la figure 3 est dit à pseudo-onde entretenue du fait qu'il transforme un signal à onde entretenue en provenance du radioaltimètre à son entrée 17 en un signal de sortie haché. Le hachage du signal ne présente aucun inconvénient pour le système pourvu que la fréquence de hachage respecte le théorème d'échantillonnage par rapport à la fréquence de battement $f_{b1}$ qui est très voisine de la fréquence de consigne $f_o$ dans le distancemètre. Pour le radioaltimètre de la figure 2, la fréquence $f_o$ est généralement choisie inférieure à 100 kHz et typiquement

·    **0163345**

égale à 25 kHz ou 50 kHz. La fréquence de fonctionnement du commutateur 18, sous l'influence d'un signal de commande RA en provenance d'un séquenceur 31 doit être au moins égale au double de la fréquence $f_o$, c'est-à-dire pour $f_o$ inférieure ou égale à 100 kHz, au moins égale à 200 kHz. A titre d'application on choisit une fréquence de 400 kHz, soit une durée de cycle de 2,5 μs pour le commutateur 18.

On peut distinguer trois phases pour le fonctionnement du répondeur, à savoir une phase de réception, une phase de bouclage interne dite de recirculation et une phase d'émission. La phase de réception est celle qui est représentée sur la figure 3. La ligne à retard 27 accumule, pendant un temps $\tau_1$, le signal reçu par l'antenne 17 et amplifié à travers les amplificateurs 23 et 24, puis le commutateur 22 change de position, ce qui marque le début de la phase de recirculation pendant un temps encore égal à $\tau_1$. Pendant la phase de recirculation, le signal circule en boucle à travers les éléments 24 et 27, l'amplification apportée par l'amplificateur 24 étant supérieure à l'atténuation due à la ligne à retard 27. Pendant la phase de recirculation, le commutateur 18 peut occuper une position quelconque sous la commande du signal RA. A la fin du deuxième intervalle de temps consécutif de durée $\tau_1$, le commutateur 26 change à son tour de position, ainsi que le commutateur 18 si ce n'était déjà fait à la phase prédédente, ce qui marque le début de la phase d'émission de durée $\tau_1$ pendant laquelle la position des contacts des commutateurs 18, 22 et 26 est inverse de celle représentée sur la figure. Le signal est ainsi émis pendant un temps $\tau_1$ après avoir été retardé d'un temps $\tau' = 2\tau_1$, soit un rapport cyclique maximal de 1/3 et après avoir été amplifié une fois par le préamplificateur 23 et trois fois par l'amplificateur 24. En pratique, il faut s'assurer que le signal émis par le répondeur et revenant après réflexion sur un obstacle soit suffisamment atténué pour qu'il n'existe aucun risque d'accrochage. Etant donné le gain du répondeur qui peut être supérieur à 100 dB, il faut s'assurer que la durée qui s'écoule entre le début d'une émission et le début de la réception suivante soit assez élevée pour que le risque d'accrochage indiqué ci-dessus soit physiquement impossible parce que l'obstacle provoquant l'écho devrait être trop proche et trop grand. En respectant un temps de latence de l'ordre de 1 µs entre la fin d'une émission et le début de la réception suivante on peut montrer que l'on supprime tout risque d'accrochage pour un signal dont la porteuse a une longueur d'onde de l'ordre de 10 cm, ce qui correspond aux hyperfréquences utilisées couramment pour le système décrit. Ce temps de latence se traduit, à la figure 3, par le maintien en position d'émission des trois commutateurs avant leur retour simultané à la position de réception. Par exemple, la durée $\tau_1$ est égale à 0,5 µs, ce qui donne un temps de cycle de 2,5 µs pour le commutateur 18 et un rapport cyclique de 0,2 pour le répondeur. Ce rapport cyclique de l'ordre de 0,2 se traduit par une atténuation équivalente de quelques décibels seulement sur le signal réémis par le répondeur. Le fonctionnement des commutateurs 18, 22 et 26 pour l'obtention des séquences décrites ci-dessus est réalisé sous la commande des signaux RA, RB et RC émis par le séquenceur 31.

On notera qu'un autre fonctionnement est possible, pour le répondeur de la figure 3, selon lequel la phase de recirculation est supprimée. Dans ce dernier cas, le signal ne traverse qu'une fois la ligne à retard 27, deux fois l'amplificateur 24 et le rapport cyclique devient égal à 0,25. Pour ce fonctionnement simplifié les trois commutateurs fonctionnent en synchronisme, sous la commande du signal RA qui s'identifie alors aux signaux RB et RC.

Pendant le vol de l'aéronef, respectivement la mission de reconnaissance du missile, le circuit de la figure 2 est utilisé exclusivement comme radioaltimètre sous la commande du signal $\overline{DA}$. Lorsque l'aéronef ou le missile

0163345

14

arrive à proximité du point A où se trouve la balise de la figure 3, plus précisément à partir d'une distance au moins égale à : R + 2d, indiquée par la centrale à inertie, le circuit de la figure 2 est commandé, par le séquenceur 16, pour effectuer en alternance des mesures de distance D et des mesures de hauteur H. Les moyens de calcul embarqués permettent de déduire la distance L de l'aéronef à l'axe X conformément à la formule :

$$L = \sqrt{D^2 - H^2} \qquad\qquad (6)$$

Selon l'invention, au moins deux premières déterminations rapprochées de la distance L par mesure de D et H puis calcul sont effectuées, à bord de l'aéronef à l'intérieur du cercle T sans modification de la trajectoire autonome de l'aéronef. On peut se reporter à ce sujet à la figure 4 qui est une vue de dessus de la zone d'arrivée de l'aéronef sur laquelle le cercle T et le point A sont représentés. La première distance déterminée, $L_1$ à un instant $t_1$ permet à l'aéronef de détecter lui-même sa position sur un cercle $T_1$ de centre $A_1$ et de rayon $L_1$. De même la deuxième distance $L_2$ à l'instant $t_2$ permet à l'aéronef de se situer sur un cercle $T_2$, plus petit que $T_1$, de centre $A_1$ et de rayon $L_2$. Par ailleurs, grâce à sa centrale à inertie et à une boussole embarquée, l'aéronef connaît à tout instant son vecteur vitesse horizontal $\vec{v}$. Au temps $t_2$, l'aéronef se trouve aussi sur le cercle $T_3$ de centre O et de rayon $L_1$ obtenu par translation du cercle $T_1$ selon le vecteur :

$$\vec{AO} = \int_{t_1}^{t_2} \vec{v}(t)dt, \text{ soit, pour des instants } t_1 \text{ et } t_2$$

rapprochés en première approximation : $\vec{AO} = \vec{v}(t_2 - t_1)$. Les cercles $T_2$ et $T_3$ se coupent en deux points B et B'. A l'instant $t_2$ l'aéronef se trouve donc en l'un des deux points B ou B'. La position des points B et B' peut être calculée avec précision et rapidité, de façon connue, par les moyens de calcul embarqués. Il reste cependant à lever l'indétermination

sur la position de l'aéronef due à l'existence de deux points possibles. Pour cela, plusieurs solutions sont possibles.

Selon un premier mode de réalisation représenté à la figure 4, juste après l'instant $t_2$, l'aéronef reçoit une commande de trajectoire en boucle selon un sens de rotation déterminé, par exemple vers la droite, de façon telle qu'il repasse après un temps mesurable sensiblement au point B (ou B') à un instant $t_3$ avec un vecteur vitesse $\vec{v}'$ sensiblement perpendiculaire à celui qu'il avait à l'instant $t_2$. Cette manoeuvre commandée à l'aéronef peut être effectuée automatiquement de façon connue par association entre les moyens de pilotage de l'aéronef et sa centrale à inertie. Juste après l'instant $t_3$, une troisième mesure de distance $L_3$ est effectuée à un instant $t_4$. Pour un virage préalable à droite, si la valeur de $L_3$ est supérieure à celle de $L_2$, les moyens de calcul indiquent que l'aéronef est, en $T_4$, à proximité immédiate du point B' ou, si $L_3$ est inférieur à $L_2$, que l'aéronef est à proximité immédiate de B, avec le vecteur vitesse $\vec{v}'$ dans les deux cas. La déduction est inverse pour un virage préalable à gauche. Juste après l'instant $t_3$, l'aéronef connaît donc sa position précise par rapport aux points A ou A' ainsi que son vecteur vitesse. A partir de là, la phase finale de guidage ou de recalage de position peut être effectuée, de façon connue, pour atteindre le point A ou le point A' soit au moyen de la centrale à inertie, dont l'erreur de position vient d'être corrigée, soit au moyen du système de guidage terminal lui-même, constitué par le radioaltimètre-distancemètre et la balise-répondeur des figures 2 et 3.

Selon un deuxième mode de réalisation représenté à la figure 5 des valeurs de L assez rapprochées sont déterminées, sans modification de la trajectoire de l'aéronef, à partir de l'instant où le radioaltimètre de la figure 2 est autorisé à fonctionner en distancemètre et

16 0163345

où l'aéronef est suffisamment proche du point A pour que le système interrogateur-répondeur puisse fonctionner c'est-à-dire en substance dès que l'aéronef a franchi les limites du cercle T. La courbe L(t) représentative des distances L ainsi obtenues en fonction du temps, non représentée, est d'abord décroissante puis passe par un minimum à l'instant où l'aéronef passe au plus près de l'axe X, en un point M ou M'. La droite perpendiculaire en ce point M à la trajectoire autonome de l'aéronef passe par l'axe X sensiblement au point $A_1$. Or le point M ou M' peut être déterminé avec une très faible erreur si on l'identifie au premier point F ou F' à l'instant $t_5$ pour lequel la courbe des distances L devient croissante, la précision obtenue étant d'autant plus grande que les mesures successives de L sont plus rapprochées, au moins au voisinage du minimum de la courbe L(t). Juste après l'instant $t_5$, l'aéronef peut par exemple recevoir une commande automatique de manoeuvre telle que celle déjà décrite en référence à la figure 4. Juste après avoir parcouru une boucle dans un sens prédéterminé et être repassé sensiblement au point F à un instant $t_6$, une détermination de la distance L supplémentaire, à un instant $t_7$ permet de lever l'ambiguïté signalée ci-dessus sur la position de l'aéronef et de lui indiquer par quel côté, droit ou gauche, ce dernier aborde l'axe X. Un avantage de ce mode de réalisation est qu'à l'instant $t_7$, le vecteur vitesse de l'aéronef est porté par une droite qui passe sensiblement par l'axe X. Selon le cas, la direction du vecteur vitesse doit être soit conservée, soit inversée c'est-à-dire modifiée de 180°. On notera que les boucles que suit la trajectoire de l'aéronef, sur les figures 4 et 5 sont effectuées exclusivement et intégralement sous la commande de la centrale à inertie, qu'elles peuvent être effectuées à une échelle bien supérieure à celle représentée en trait plein et notamment se situer pour leur plus grande part à l'extérieur du cercle T.

En variante, le deuxième mode de réalisation de l'invention décrit au paragraphe précédent peut être simplifié, comme représenté en trait interrompu à la figure 5, dans le cas où l'on prévoit, pour l'aéronef, une trajectoire en boucle suffisamment grande. En effet, si l'on prévoit que l'aéronef, juste après que sa distance par rapport au point A est passée par un minimum, décrive sur commande interne une boucle sensiblement horizontale et revienne vers le point de distance minimum (point M ou M' sur la figure 5) perpendiculairement à la trajectoire qu'il avait lors de son premier passage par ce point, l'aéronef passera à coup sûr à proximité immédiate du point $A_1$, à l'aplomb du point A, pourvu que la boucle effectuée soit assez grande c'est-à-dire, pour fixer les idées, pourvu que son périmètre soit au moins du même ordre de grandeur que la circonférence du cercle T. Selon que l'axe X défini par les points A et $A_1$ est initialement abordé par la droite ou par la gauche, le passage à proximité immédiate du point $A_1$ se fera, dans ces conditions, juste avant, respectivement juste après la fin de la boucle. Une mesure supplémentaire de la distance D lors du retour de l'aéronef dans le deuxième volume suffit alors pour se ramener au cas précédemment décrit du passage par le point M au paragraphe précédent puisqu'on a fait en sorte, en agrandissant la trajectoire en boucle d'obtenir, à l'occasion de cette mesure supplémentaire, un vecteur vitesse de l'aéronef toujours dirigé vers l'axe X, que l'aéronef soit préalablement passé par le point M ou par le point M'. Par exemple, pour que le point de passage très près du point $A_1$ soit déterminé avec une bonne précision, des mesures alternées rapprochées de D et de H peuvent être effectuées par le système au moins pendant la deuxième moitié de la trajectoire en boucle dans le cas d'un passage préalable par M' (voir figure 5), et au delà de cette deuxième moitié dans le cas d'un passage préalable par M.

La figure 6 représente un troisième mode de réalisation de l'invention dont la première phase est identique à celle du mode de réalisation précédemment décrit (figure 5) jusqu'à l'arrivée au point F à l'instant $t_5$. Juste après le temps $t_5$, l'aéronef reçoit une commande de trajectoire circulaire selon un sens de rotation prédéterminé, par exemple vers la gauche; le cercle Y ou Y' en question ayant un rayon de courbure égal à $L_5$, ce qui est rendu possible par la connaissance du vecteur vitesse tangentiel au point F ou F'. Après avoir parcouru une fraction notable du cercle F, une nouvelle mesure de distance est effectuée, en un point G ou G' à un instant $t_8$, qui permet de déterminer sur lequel des deux cercles Y ou Y' se trouve l'aéronef. En effet, l'appartenance au cercle Y' est signalée par une distance notablement plus grande que $L_5$ alors que l'appartenance au cercle Y est signalée par une distance sensiblement égale à $L_5$. On notera que le point G' peut se trouver hors de portée du répondeur. Dans ce dernier cas, c'est l'impossibilité de déterminer la distance qui peut signaler la présence de l'aéronef sur le cercle Y'. Cependant, il est préférable pour des questions de fiabilité du système d'éviter ce dernier cas, ce qui est toujours possible en choisissant les points G ou G' suffisamment proches des points F ou F'. Lorsqu'il est déterminé que l'aéronef se trouve sur le cercle Y', sa procédure d'atterrissage peut consister à poursuivre sa trajectoire sur le cercle Y' jusqu'au retour au point F' où il possède les informations suffisantes de position et de vitesse pour rallier le point A ou $A_1$ selon le cas. Lorsqu'il est déterminé que l'aéronef est sur le cercle Y, l'aéronef possède dès cet instant les informations suffisantes de position et de vitesse qui lui permettent de rallier le point A ou $A_1$ puisque, comme lors du deuxième passage au point F' dans le cas précédent, il connaît sa vitesse, sa distance à l'axe X et que son vecteur vitesse

**0163345**

est perpendiculaire au plan défini par l'axe X et l'aéronef. On notera que l'indétermination à lever pour permettre à l'aéronef de rejoindre l'axe X consiste précisément en ce que l'aéronef puisse déterminer, par ses mesures propres, de quel côté il aborde l'axe X lors de son arrivée. Cette considération conduit à un quatrième mode de réalisation décrit ci-dessous en référence à la figure 7.

Le quatrième mode de réalisation impose une condition sur les valeurs relatives de d et R, qui s'exprime par :

$$R > 2d \qquad\qquad (7)$$

alors que les modes de réalisation décrits ci-dessus en référence aux figures 4, 5 et 6 se satisfont de valeurs de R et de d qui sont du même ordre, R restant cependant toujours supérieur à d. Il peut donc s'avérer nécessaire d'augmenter la portée du système de guidage pour mettre en oeuvre le mode de réalisation de la figure 7. Cela peut être obtenu notamment par augmentation de la longueur d'onde $\lambda$, c'est-à-dire par diminution de la fréquence du signal à fréquence F(t). En effet, la valeur de l'atténuation A entre l'aéronef et le répondeur est donnée par la formule :

$$\frac{1}{A} = \frac{G_e \cdot G_r\ \lambda^2}{(4\Pi)^2\ D^2} + C \qquad\qquad (8)$$

avec :

$G_e$ : gain de l'antenne 4 du distancemètre dans la direction du répondeur ;

$G_r$ : gain de l'antenne 17 du répondeur dans la direction de l'aéronef ;

C : atténuation des câbles.

L'idée de base du quatrième mode de réalisation consiste en ce que lorsque l'aéronef, à l'occasion de son retour, arrive à une distance prédéterminée du point A selon son estimation propre, cette distance étant supérieure ou égale à R + 2d, il reçoit automatiquement et de façon

20                                     **0163345**

autonome une commande de changement de trajectoire qui lui impose d'arriver d'un côté prédéterminé du point A, par exemple du côté droit, figure 7, à une distance prédéterminée comprise entre d et R/2. La relation (7) ci-dessus assure que l'aéronef pénètre bien à l'intérieur du cercle T. Sur la figure 7, la courbe 35, formée d'une ligne brisée à deux segments qui se coupent en un point H extérieur au cercle T indique la trajectoire autonome de l'aéronef ; le cercle K de rayon d délimite la zone à l'intérieur de laquelle l'aéronef serait susceptible d'atterrir sans l'aide du système de guidage. Moyennant les conditions et contraintes expliquées ci-dessus, on est assuré que l'aéronef pénètre à l'intérieur du cercle T en abordant l'axe X d'un côté prédéterminé (par la droite dans le cas de la figure 7). Il est dès lors possible, en utilisant au moins le début de la procédure adoptée pour les modes de réalisation précédents de déterminer le point B ou F, respectivement B' ou F' à l'instant $t_4$ ou $t_5$ à partir duquel la manoeuvre finale qui doit guider l'aéronef sur l'axe X devient immédiatement possible de façon connue sous la commande soit de la centrale à inertie, soit du système de guidage terminal selon l'invention, ce dernier cas étant préféré dans le cas où l'aéronef est un hélicoptère.

Le système décrit ci-dessus permet une portée de détection R de l'ordre du km pour une longueur d'onde $\lambda$ de l'ordre de 7 cm et pour un produit des gains d'antenne $G_e \times G_r$ de l'ordre de 1. En comparaison, les valeurs courantes de l'erreur de position d de l'aéronef sont de l'ordre de 400 m. La disposition particulière déjà décrite des antennes 4 et 17 fait qu'une grande dispersion de gain total du système interrogateur-répondeur est à prévoir si aucune précaution n'est prise, ce qui pourrait causer des saturations en certains points du système lorsque les antennes sont trop rapprochées, lors de la mesure de distance. Pour éviter

cet inconvénient, l'antenne 17 du répondeur est une antenne à polarisation circulaire dont le diagramme de rayonnement est, de préférence, cosécanté et le gain inférieur à 0 dB au-dessous de l'horizontale. La normalisation des gains d'antenne est obtenue, en première approximation en donnant à l'antenne 17 un gain G cosécanté :

$$G = \frac{D^2}{H^2} \qquad (9)$$

soit encore :

$$G = \frac{1}{1 - \cos^2 \beta} \qquad (10)$$

$\beta$ étant l'angle dans un plan vertical sous lequel est vu l'aéronef depuis le répondeur au point A. L'antenne 17 du répondeur peut être soit à polarisation circulaire, soit constituée de deux antennes élémentaires à polarisation linéaire, perpendiculaires entre elles.

On notera qu'il est possible de modifier légèrement la structure du système d'antennes dans le radioaltimètre de la figure 2 pour obtenir un appareil de mesure de distance fonctionnant avec une seule antenne émettrice-réceptrice constituée par l'antenne 4 ou l'antenne 5 ; ceci est rendu possible par le fait que le répondeur n'est jamais très proche et, de plus, que le répondeur retarde nécessairement d'un court intervalle de temps $\tau'$ le signal qu'il réémet. Pour cela il suffit d'insérer de façon connue en soi dans l'une des voies d'émission ou de réception un circulateur et dans l'autre voie un commutateur à deux positions commandé en synchronisme avec le commutateur 9 dont un contact est relié au circulateur et l'autre contact à l'antenne qui n'est pas reliée au circulateur. Dans ce cas seule l'antenne émettrice-réceptrice utilisée pour l'appareil de mesure de distance nécessite d'avoir un diagramme de rayonnement large.

REVENDICATIONS :

1.        Système de guidage terminal ou de recalage de position pour aéronef, notamment pour missile de reconnaissance aérienne muni de moyens de calcul selon lequel un radioaltimètre embarqué à bord du missile coopère avec un répondeur disposé, au sol, à l'emplacement A souhaité pour le retour de l'aéronef ou le recalage, le radioaltimètre étant du type à onde continue modulée en fréquence de façon sensiblement linéaire, à une antenne émettrice et une antenne réceptrice orientées vers le sol, le répondeur étant du type à pseudo-onde entretenue comportant des commutateurs à deux positions pour radiofréquences et une antenne réceptrice-émettrice, caractérisé en ce que ledit radioaltimètre est adapté pour un fonctionnement séquentiel en distancemètre et comporte à cet effet des moyens pour décaler en fréquence le signal d'oscillation locale à l'aide d'un commutateur à deux positions, ledit système ayant une portée suffisante pour pouvoir fonctionner dans un deuxième volume prédéterminé centré autour du point A, ledit deuxième volume pouvant englober un premier volume défini par la précision en distance d, h propre à l'aéronef pour son retour autonome et que la position précise de l'aéronef à proximité du point A est déterminée, lors du retour ou du recalage de ce dernier, par au moins deux mesures successives de distance D par rapport au point A.

2.        Système de guidage terminal ou de recalage de position pour aéronef selon la revendication 1, caractérisé en ce qu'après ladite deuxième mesure de distance à un instant $t_2$, l'aéronef reçoit une commande de trajectoire en boucle selon un sens de rotation prédéterminé de façon telle qu'il repasse après un temps mesurable sensiblement au point où il se trouvait à l'instant $t_2$ à un instant $t_3$ avec un vecteur vitesse sensiblement perpendiculaire à celui qu'il avait à l'instant

$t_2$ et qu'une troisième mesure de distance est effectuée à un instant $t_4$ juste postérieur à l'instant $t_3$.

3. Système de guidage terminal ou de recalage de position pour aéronef selon la revendication 1, caractérisé en ce que plusieurs mesures rapprochées successives de distance sont effectuées sans modification de la trajectoire autonome de l'aéronef, incluant des distances décroissantes au moins jusqu'au passage au plus près du point A, et au moins une distance $L_5$ à nouveau croissante en un point F à un instant $t_5$.

4. Système de guidage terminal ou de recalage de position pour aéronef selon la revendication 3, caractérisé en ce que juste après l'instant $t_5$ l'aéronef reçoit une commande de trajectoire en boucle selon un sens de rotation prédéterminé de façon telle qu'il repasse après un temps mesurable sensiblement au point F à un instant $t_6$ avec un vecteur vitesse sensiblement perpendiculaire à celui qu'il avait à l'instant $t_5$ et qu'une mesure de distance supplémentaire est effectuée à un instant $t_7$ juste postérieur à l'instant $t_6$.

5. Système de guidage terminal ou de recalage de position pour aéronef selon la revendication 3, caractérisé en ce que juste après l'instant $t_5$ l'aéronef reçoit une commande de trajectoire en boucle selon un sens de rotation prédéterminé de façon telle qu'il repasse après un temps mesurable sensiblement au point F à un instant $t_6$ avec un vecteur vitesse sensiblement perpendiculaire à celui qu'il avait à l'instant $t_5$, que le diamètre de ladite boucle est suffisamment grand pour que la majeure partie de la trajectoire en boucle soit effectuée à l'extérieur dudit deuxième volume et qu'au moins une mesure de distance supplémentaire est effectuée lors du retour de l'aéronef dans ledit deuxième volume.

6. Système de guidage terminal ou de recalage de position pour aéronef selon la revendication 3, caractérisé

en ce que juste après l'instant $t_5$ l'aéronef reçoit une commande de trajectoire circulaire selon un sens de rotation prédéterminé, ledit cercle ayant un rayon de courbure égal à la projection horizontale $L_5$ de sa distance D au point A et qu'après avoir parcouru une fraction notable de ce cercle, une mesure supplémentaire de distance est effectuée à un instant $t_8$.

7.　Système de guidage terminal ou de recalage de position pour aéronef selon la revendication 1 ou 3, caractérisé en ce que les plus grands diamètres du premier volume sont supérieurs au double des plus grands diamètres du deuxième volume et que lorsque l'aéronef, à l'occasion de son retour, arrive à une distance prédéterminée du point A selon son estimation propre supérieure à environ le plus grand diamètre du premier volume, il reçoit automatiquement de façon autonome une commande de changement de trajectoire qui lui impose d'arriver d'un côté prédéterminé du point A à une distance légèrement supérieure à son erreur de position maximale d à cet instant.

8.　Système de guidage terminal ou de recalage de position pour aéronef selon l'une des revendications 1 à 7, caractérisé en ce que le diagramme de rayonnement de l'antenne réceptrice-émettrice dudit répondeur est cosécanté et que le gain de ladite antenne est inférieur à 0 dB en dessous de l'horizontale.

1/2

**FIG.1**

**FIG.4**

**FIG.7**

**FIG.5**

**FIG.6**

0163345

FIG.2

FIG.3

Office européen
des brevets

**0163345**
Numéro de la demande

**RAPPORT DE RECHERCHE EUROPEENNE**

EP 85 20 0786

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| Y | US-A-4 168 524 (J. ARNOLD SOLTZ et al.)<br>* Figure 1; colonne 3, ligne 26 - colonne 5, ligne 13; colonne 5, ligne 52 - colonne 8, ligne 21 *<br>--- | 1 | G 01 S 13/87<br>G 01 S 5/14<br>G 01 C 21/16 |
| Y | FR-A-2 504 683 (TRT)<br>* Figure 1; page 2, ligne 14 - page 4, ligne 11 *<br>--- | 1 | |
| Y | FR-A-2 343 258 (TRT)<br>* Figures 3,7,8; page 4, ligne 34 - page 9, ligne 14; page 11, ligne 18 - page 15, ligne 5 *<br>--- | 1 | |
| A,D | FR-A-2 435 866 (TRT)<br>----- | | |

| | | | DOMAINES TECHNIQUES RECHERCHES (Int. Cl.4) |
|---|---|---|---|
| | | | G 01 S<br>G 01 C |

Le présent rapport de recherche a été établi pour toutes les revendications

| Lieu de la recherche | Date d'achèvement de la recherche | Examinateur |
|---|---|---|
| LA HAYE | 02-08-1985 | CANNARD J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82